(19) Europäisches Patentamt
European Patent Office
Office européen des brevets

(11) EP 2 653 882 B1

(12) **EUROPEAN PATENT SPECIFICATION**

(45) Date of publication and mention
of the grant of the patent:
**20.12.2017 Bulletin 2017/51**

(51) Int Cl.:
*G01S 7/02* (2006.01)       *G01S 7/41* (2006.01)
*G01N 22/00* (2006.01)

(21) Application number: **13164708.3**

(22) Date of filing: **09.09.2009**

(54) **A method for road condition recognition**

Verfahren zur Erkennung des Straßenzustands

Procédé de reconnaissance de condition routière

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **11.09.2008 FI 20085858**

(43) Date of publication of application:
**23.10.2013 Bulletin 2013/43**

(62) Document number(s) of the earlier application(s) in
accordance with Art. 76 EPC:
**09397523.3 / 2 216 659**

(73) Proprietor: **Teknologian tutkimuskeskus VTT Oy
02150 Espoo (FI)**

(72) Inventors:
• **Viikari, Ville
00076 Aalto (FI)**
• **Varpula, Timo
02044 Vtt (FI)**

(74) Representative: **Seppo Laine Oy
Itämerenkatu 3 B
00180 Helsinki (FI)**

(56) References cited:
**EP-A2- 0 875 749**

• **RUDOLF H ET AL: "The rococo project: a
cooperation between EMSL and Daimler-Benz",
FIRST EMSL USER WORKSHOP.
PROCEEDINGS. ISPRA 23-24 APRIL 1996,, vol.
EUR-17326-EN, 23 April 1996 (1996-04-23), pages
13-18, XP007913728, & HANS RUDOLF ET AL:
"The RoCoCo Project, a cooperation between
EMSL and Daimler Benz, Slide Set", FIRST EMSL
USER WORKSHOP. PROCEEDINGS. ISPRA
23-24 APRIL 1996,, 23 April 1995 (1995-04-23),
pages 1-10, XP007918709,**
• **KAMAL SARABANDI ET AL: "Modeling and
Measurements of Scattering from Road Surfaces
at Millimeter-Wave Frequencies", IEEE
TRANSACTIONS ON ANTENNAS AND
PROPAGATION, IEEE SERVICE CENTER,
PISCATAWAY, NJ, US LNKD-
DOI:10.1109/8.650080, vol. 45, no. 11, 1 November
1997 (1997-11-01), pages 1679-1688,
XP011003105, ISSN: 0018-926X**

## Description

### *Field of the invention*

The field of this invention is automotive radar technology for detecting lowfriction spots caused by water, ice or snow on asphalt.

## I. BACKROUND OF THE INVENTION

Automotive radars are becoming standard equipment in premium cars and they are expected to become common also in medium and lower class cars. The radars are expected to increase safety and to facilitate driving. Commercially available radars are either for blind spot detection (BSD) or for automatic cruise control (ACC). BSD systems ease certain maneuvering, such as lane changing, whereas ACC systems adjust the vehicle speed according to the preceding vehicle.

Currently two frequency bands are allocated for automotive radars in Europe, 22 to 24 GHz band for short range (30 m) radars [1] and 76 to 77 GHz band for long range (150 m) radars [2]. The third band, 77 - 81 GHz, is being currently allocated by European Telecommunications Standards Institute (ETSI) for short range (30 m) collision warning automotive radars [3].

Automotive radars could possibly be used also for detecting road conditions, such as low friction due to water, ice or snow on road. Currently infrared optical sensors and some mechanical devices are used to monitor the road conditions [4]. These systems are either unsuitable or too expensive for ordinary cars. Their detection range is also limited in forward direction; in fact nil in some cases. Multipurpose radar sensors offer clear benefits: The total number of sensors in a vehicle is not increased giving cost benefits. The detection range of radar is potentially substantial.

Several studies on using automotive radars for road condition recognition are reported. Bistatic (transmitter and receiver are in different locations) scattering measurements from different road surfaces in laboratory conditions are reported at 76 GHz [5] and at 24 GHz [6]. The scattering from different road surfaces is measured with coherent polarimetric radar. Road conditions are then recognized from the eigenvalues of Stokes or Mueller matrix [7]. The measurement results at both frequencies indicate that it is possible to distinguish between two concrete roads with different roughness. The authors state that moisture on road can be detected at 76 GHz. The results at 24 GHz show that water, ice, snow and rime on road changes its scattering properties.

Kees et al. report a bistatic radar system operating at 61 GHz for recognizing road condition [8]. The radar system is located under the car chassis and it is able to transmit and receive at both linear polarizations. The system coherently measures all four polarization combinations and the road condition is recognized by comparing the amplitudes and/or phases between responses at different polarizations. Measurements with a prototype radar revealed that the system is able to distinguish between asphalt and cobblestone road pavements.

Finkele has reported a bistatic radar operating at 76 GHz capable for detecting ice layer on road surface [9]. This fully polarimetric radar measures the specular reflection from the road and utilizes the polarization properties of the reflected wave for detecting ice. The operation principle is verified with simulations and measurements made in laboratory as well as under real traffic conditions.

Hetzner has measured different road conditions using active bistatic radar and a passive radiometer operating at 35 GHz and 90 GHz [10]. In his experiments, the radiometer was found to be more suitable for road condition recognition.

Magerl et al. report fixed 2.45 GHz road surveillance radar capable for detecting weather-induced road conditions [11]. Both transmitter and receiver are located at three meters height at opposite sides of the road. According to the results with prototype radar, the system is capable for measuring water layer thickness and water salinity and also detecting snow layer on road.

In addition to the previously mentioned scientific publications, there are several patents and patent applications on automotive radars for road condition recognition [12]-[14].

EP 0 875 749 A2 discloses a method for identification of the state of a roadway surface using a microwave transmitting/receiving system, in which the incidence angles of the signals which are transmitted from the microwave system are set slightly below the Brewster angle for a dry road. The method uses the image of the polarization states of the reflected signals as projection points on a Poincaré sphere, with the roughness, the degree of wetness, the degree of dirt and the degree of icing of the roadway surface being determined from the distribution and the movement of the projection points.

K. Sarabandi et al.: "Modeling and Measurements of Scattering from Road Surfaces at Millimeter-Wave Frequencies", IEE Transactions on Antennas and Propagation, vol 45, no. 11, 1 November 1997, pages 1679-1688, discloses the use of polarimetric 94-GHz radar system for characterizing the polarimetric backscatter responses of asphalt surfaces under many physical conditions near grazing incidence angles (70°-88°).

H. Rudolf et al.: "The RoCoCo Project: A Cooperation between EMSL and Daimler-Benz", 1st EMSL User Workshop, Proceedings. Ispra, Italy 23-24 April 1996, vol. EUR-17326-EN, 23 April 1996, pages 13-18 discloses a method for road condition recognition by making polarimetric radar measurements at 20 - 24 GHz.

## DISCLOSURE OF THE INVENTION

A method according to the invention is defined in claim 1.

## DETAILED DISCLOSURE OF THE EMBODIMENTS

In this paper, we study the capabilities of a 24 GHz forward looking monostatic (transmitter and receiver are in the same location) radar as a detector of low friction spots on asphalt. The paper is organized as follows: Section II discusses laboratory experiments on backscattering properties of dry, wet and icy of asphalt. Section III presents field experiments on backscattering properties of dry, wet, icy and snowy asphalt. A roughsurface scattering model is used to study the effect of surface parameters on backscattering in Section IV. Section V discusses the radar requirements for detecting road conditions and Section VI concludes the paper.

## II. LABORATORY EXPERIMENTS

Backscattering properties of dry, wet and icy asphalt at 24 GHz and at 77 GHz are studied in laboratory conditions in [15]. For convenience, the measurement procedure is shortly described in the following with the selected measurement results at 24 GHz.

### A. Measurement Setup

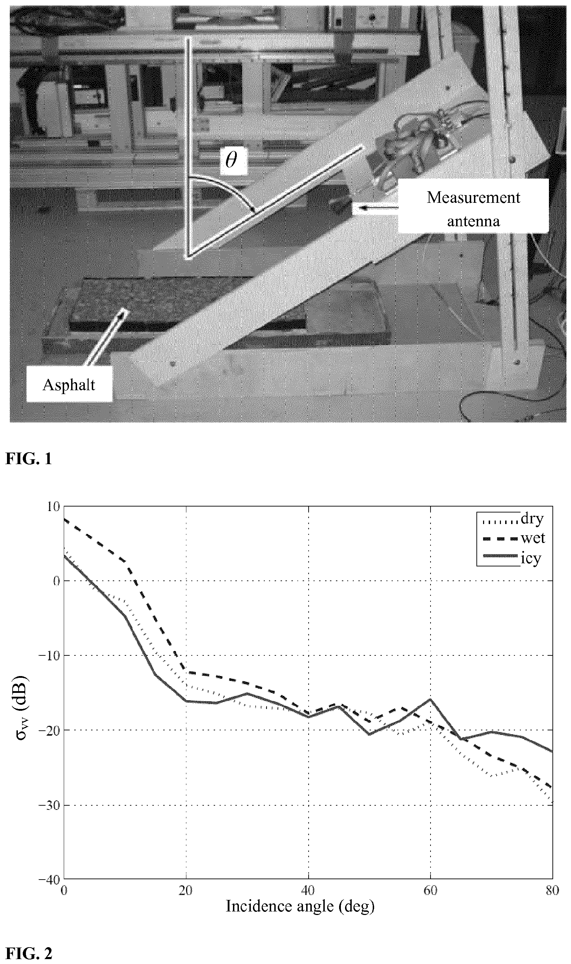

Monostatic backscattering from an asphalt sample is measured with a network analyzer (HP 8510) and a horn antenna mounted on a rotating arm for allowing the backscattering measurements at different incidence angles (from 0° to 80° with 5° increments). The measurement distance is 46 cm fulfilling generally required farfield distance of $R \geq 2D^2/\lambda$, where $D$ is the largest dimension of the radar antenna and $\lambda$ is the wavelength. Figure 1 shows a photograph of the measurement setup 295 by 800 mm asphalt sample (stone mastic asphalt 16) is taken from a Finnish road with an average traffic flow of approximately 8000 vehicles a day.

Fig. 1A photograph of the measurement setup. The measurement horn antenna, which is mounted on the rotating arm, points towards the asphalt sample placed on the floor.

Because the sample is taken after winter season the tires with studs, which are commonly used in Finland, have eroded the bitumen from the asphalt such that the rock filling is exposed. An ice layer of 1 - 2 mm was made by first cooling the asphalt sample with liquid nitrogen (-196 °C) and then watering it. The temperature of the ice remained between -5... -15 °C during the experiments.

### B. Power Calibration

The backscattered power was calibrated by measuring the normal metal plate is attenuated according to Friis free space formula:

$$\frac{P_r}{P_t} = G^2 \left( \frac{\lambda}{4\pi r} \right)^2 , \qquad (1)$$

where $r = 2R_m$ is the two-way signal path length ($R_m$ being the one-way path length to the metal plate), $P_t$ is the transmitted power, $P_r$ is the received power, $G$ is the antenna gain and $\lambda$ is the wavelength. The ratio between the received and the transmitted power is proportional to square of the reflected voltage:

$$\left| S_{11,m} \right|^2 \sim \frac{P_r}{P_t} \Rightarrow \left| S_{11,m} \right|^2 = x G^2 \left( \frac{\lambda}{8\pi R_m} \right)^2 , \qquad (2)$$

where $x$ is a constant. The radar cross section of the sample is

$$\sigma_s = \frac{P_r}{P_t} \frac{(4\pi)^3 R_s^4}{G^2 \lambda^2}, \tag{3}$$

where $R_S$ is the distance to the sample. Equation (3) can be written as

$$\sigma_s = \frac{|S_{11,s}|^2}{x} \frac{(4\pi)^3 R_s^4}{G^2 \lambda^2}, \tag{4}$$

where $S_{11,S}$ is the measured reflection coefficient from the sample. Solving $x$ from (2) and substituting it into (4) gives

$$\sigma_s = \frac{|S_{11,s}|^2}{|S_{11,m}|^2} \frac{\pi R_s^4}{R_m^2}, \tag{5}$$

The backscattered signal from a rough surface, such as asphalt, is a superposition of several weak signals produced by small irregularities on the surface. As these irregularities are often randomly distributed over a surface, also the backscattered signal varies randomly from one part of the surface to another. Therefore, it is meaningful to consider only expectation value of the backscattered signal, denoted as ⟨σ⟩.

A road is an area extensive target: its effective target size, and thus also radar cross section depends on the illuminated surface area. Such targets are characterized in terms of scattering coefficient, which defines the average radar cross section ⟨σ⟩ over illuminated surface area $A_0$ [16]:

$$\sigma_0 = \frac{\langle \sigma \rangle}{A_0}. \tag{6}$$

Illuminated surface area is limited in vertical direction either by the pulse length $c\tau$ or by the vertical beam width $\theta_v$ of the antenna, depending which one is smaller. In horizontal direction, the illuminated area is limited by the horizontal beam width $\theta_h$ of the radar antenna. The illuminated area is

$$A_0 = R_s \min\left\{ \theta_h \frac{c\tau}{2} \sec(\pi/2 - \phi), R_s \theta_v \right\}, \tag{7}$$

where $R_s$ is the distance to the (center of the) illuminated sample, c is the speed of light, $\varPhi$ is the incidence angle with respect to the surface normal and min{ } operator selects the smallest value. Combining (5), (6) and (7) gives the calibrated scattering coefficient of the sample

$$\sigma_0 = \frac{|S_{11,s}|^2}{|S_{11,m}|^2} \frac{\pi R_s^3}{R_m^2 \min\left\{ \theta_h \frac{c\tau}{2} \sec(\pi/2 - \phi), R_s \theta_v \right\}}. \tag{8}$$

The backscattering coefficients are defined for different polarizations. In the following, the backscattering coefficient is defined as $\sigma_{pp}$, where the first sub index refers to the polarization (h stands for horizontal and v for vertical) of the transmitted signal and the second index refers to that of the received signal.

### C. Signal Processing

In order to obtain reflections from the asphalt sample only, time-gating procedure was employed. In this way, the unwanted signals caused by reflections due to impedance mismatch of the antenna and by reflections from the laboratory are eliminated. In time-gating, the measured frequency response (18 - 26.5 GHz) is transformed into time domain via Fourier transform. The time response is filtered with a gate function and then transformed back into frequency domain to obtain the gated frequency response.

As backscattering coefficient is defined as statistical expectation value, several measurements on different (uncorrelated) samples should be performed to obtain it reliably. However, repeating the measurement several times with different asphalt samples is too laborious and time consuming. Therefore, the expectation of backscattered signal is obtained here by averaging over a frequency band under assumptions that the average backscattering remains constant in the frequency band and that backscattering at different frequencies are uncorrelated.

### D. Results

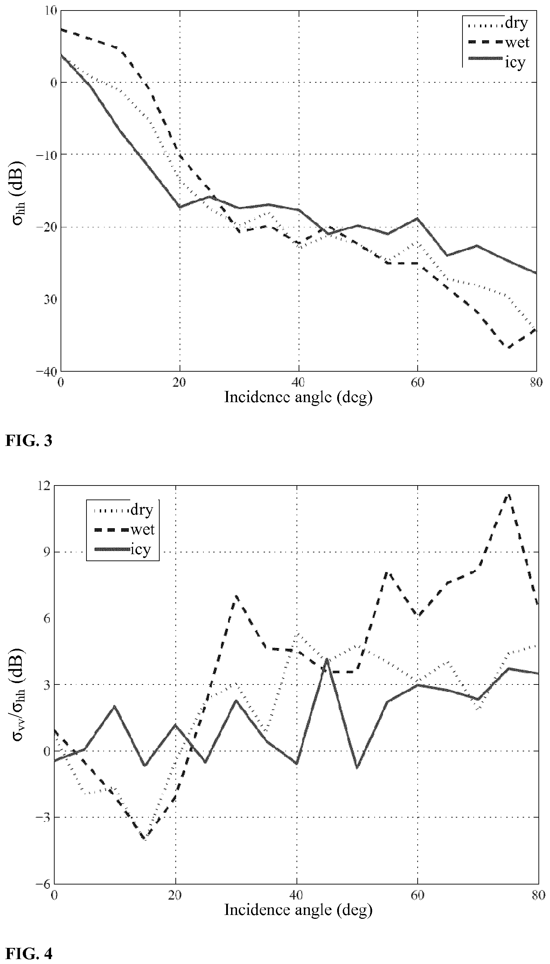

The measured backscattering coefficients at different incidence angles for dry, wet, and icy asphalt at 24 GHz are shown in Figure 2 (vv-polarization) and in Figure 3 (hh-polarization).

Fig. 2. Measured backscattering coefficient for dry (dotted line), wet (dashed line) and icy (solid line) asphalt at vv-polarization at 24 GHz.

Fig. 3. Measured backscattering coefficient for dry (dotted line), wet (dashed line) and icy (solid line) asphalt at hh-polarization at 24 GHz.

Water on asphalt seems to increase the backscattering coefficient close to normal incident, as compared to dry asphalt. At larger incidence angles water slightly increases the backscattering at vertical polarization whereas it decreases backscattering at horizontal polarization. Ice does not change the backscattering coefficient at normal incidence but increases it at both polarizations at larger incidence angles, as compared to dry asphalt.

In practice, absolute value of backscattering coefficient is not a suitable quantity for identifying water or ice on asphalt. First of all, absolute backscattering coefficient measurements are challenging with automotive radar since the target distance and weather conditions affect the backscattered signal. In addition, incidence angle and asphalt type, which are usually unknown parameters, also affect the backscattered signal. The effect of these unknown parameters is eliminated by computing ratios of backscattered signals for different polarizations. The ratios of backscattering coefficients at vv- and hh-polarizations ($\sigma_{vv}/\sigma_{hh}$) are shown in Figure 4.

Fig 4. The ratio between the backscattering coefficients at vv- and hh-polarizations at 24 GHz.

Water does not have any effect on the ratio $\sigma_{vv}/\sigma_{hh}$ at small incidence angles, whereas at large incidence angles (50° - 80°) it is about 4 dB higher than for dry asphalt. On the other hand, ice clearly increases $\sigma_{vv}/\sigma_{hh}$ at small incidence angles but slightly decreases the ratio at large incidence angles. The average decrease at large incidence angles is approximately 1 dB, even though there occurs a slight increase at 70°. This is most likely caused by the reflections due to non-ideal measurement setup. However, these results suggest that water and ice change the backscattering properties of the asphalt in such a way that they could be identified by comparing the ratio $\sigma_{vv}/\sigma_{hh}$ at large incidence angles.

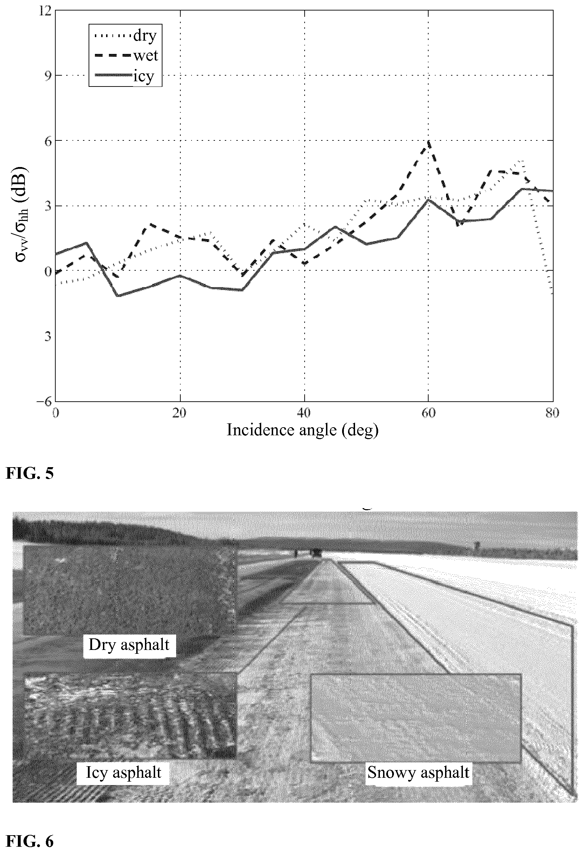

The laboratory experiments were also performed at 77 GHz, but the results at this frequency were not as promising as those at 24 GHz. The ratios of backscattering coefficients at 77 GHz at vv- and hh-polarizations ($\sigma_{vv}/\sigma_{hh}$) are shown in Figure 5.

Fig 5. The ratio between the backscattering coefficients at vv- and hh-polarizations at 77 GHz.

### III. FIELD EXPERIMENTS

The promising results from the laboratory experiments motivated us to study 24 GHz road condition recognition radar concept in two field experiment campaigns. Backscattering properties of icy and snowy asphalt were studied in the first measurement campaign in winter and backscattering properties of wet asphalt was studied in the second campaign in summer.

### A. Measurement Setup for Winter Experiments

Test tracks, each having different road condition, were prepared on a castoff runway of Ivalo airport, Finland. Road conditions studied were dry, icy, and snowy asphalt. The asphalt was slurry sealed with 8 mm rock filling and it was quite smooth as compared to normal asphalt coated roads as it was only slightly eroded. Ice and snow were removed from the asphalt using chemicals that are used to keep runways clear. These chemicals were brushed of from the asphalt, but it is possible that asphalt contained some residuals that might have a small effect on its electrical properties.

Icy part of the track had approximately a 5 cm ice layer. The ice surface was planed with a road grader used to plane icy roads especially in northern Finland. The grader produced about 1 cm deep and 3 cm wide grooves on the ice surface. The grooves were in parallel to the driving direction i.e. to the pointing direction of the radar.

Snow layer was approximately 10 cm thick and it was stamped using a special stamping machine designed to produce road conditions similar to snowy roads in typical traffic situations.

Test tracks with different road conditions were at least 50 meters long and 4 meters wide. The test tracks with close-ups of different road surfaces are shown in Figure 6.

Fig. 6. The test tracks with different road conditions.

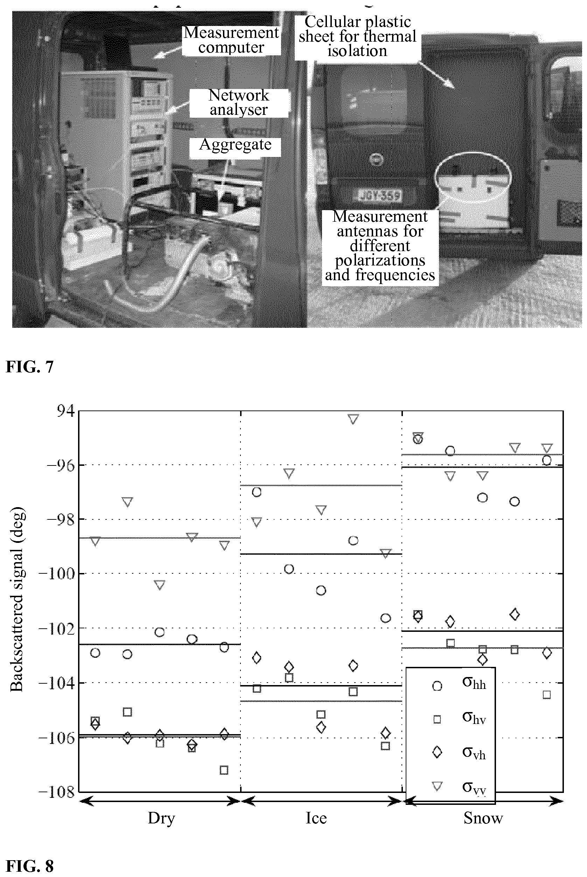

The same equipment and measurement procedure were used as in the laboratory experiments. The measurement equipment was installed in boot space of a van. The power was generated with an aggregate and delivered to the network analyzer through an uninterruptible power supply (UPS) unit. The exhaust of the aggregate was transmitted out from the van with an extended exhaust pipe. The boot space of the van was heated up with an electric heater in an attempt to maintain room temperature required by the network analyzer. The measurement antennas were aligned to point to the track from the opened back door of the van. The aperture of the opened back door was thermally isolated with a sheet of cellular plastic. The test van with the measurement equipment is shown in Figure 7. The left picture shows the network analyzer, measurement computer and the aggregate that were placed in the boot place of the van. The right picture shows the measurement antennas that pointed backwards from the back door of the van.

Fig. 7. The test van equipped with measurement equipment. The left picture shows the network analyzer, measurement computer and the aggregate that were placed in the boot place of the van. The right picture shows the measurement antennas that pointed backwards from the back door of the van.

The measurement antennas were located approximately 1 meter above the road surface. The backscattering from the test tracks was measured at 65° incidence with respect to the normal of the road surface.

In these experiments, the backscattering measurements of each road condition were repeated five times in order to be able to average the results. The measurement setup was not power-calibrated because the objective of these measurements was not to calculate the absolute backscattering coefficients but to study how the ratio between backscattering at different polarizations changes with different road conditions. The road surface temperature was 10... 15 °C during the experiments.

### B. Measurement Setup for Summer Experiments

The backscattering properties of wet asphalt were studied in field experiments conducted in a test track located in Nokia, Finland. The measurement setup was similar to that used in winter experiments. However, the measurement horns were located closer to the road surface (at 0.6 m height) and a power calibration was performed with a metal plate in order to obtain the absolute backscattering coefficients. The asphalt used for experiments was eroded by tyres with studs.

### C. Results

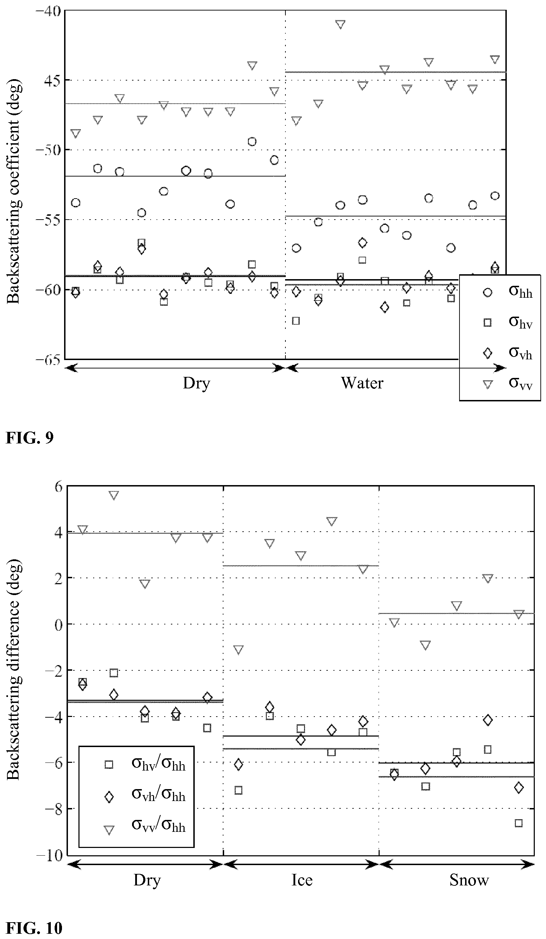

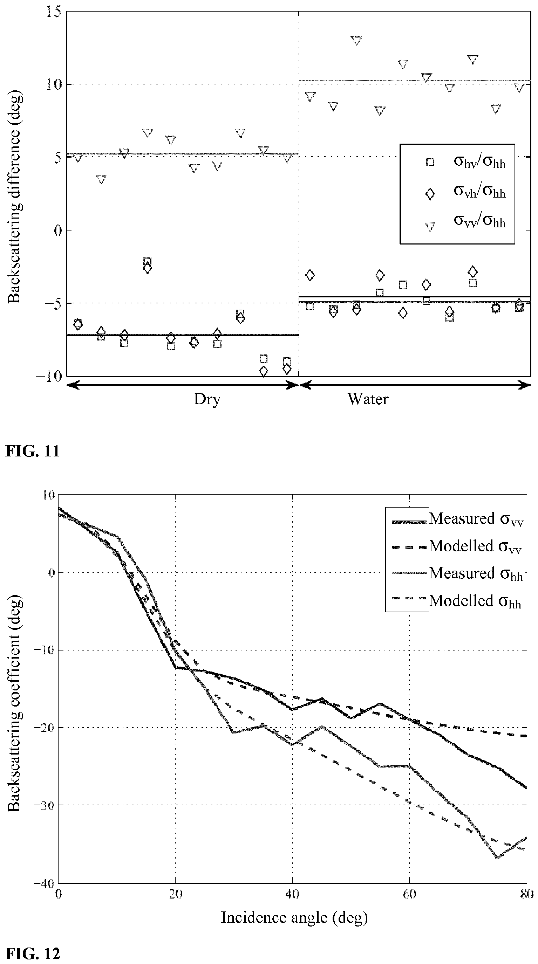

Measured backscattering of dry, icy and snowy asphalt at different polarizations is shown in Figure 8. The markers represent single measurements and solid lines represent averages over values for respective road condition and polarization. Measured backscattering of dry and wet asphalt at different polarizations is shown in Figure 9. Figures 10 and 11 show the ratios of backscattering for different polarizations.

Data in Figure 8 show that ice increases the backscattering at all polarizations from 2 to 3.5 dB as compared to dry asphalt. This result is in agreement with the laboratory experiment, where ice increased the backscattering at 65° incidence by 2 - 3 dB. As compared to icy asphalt, snow further increases the backscattering, by 1 - 3.5 dB.

According to reciprocity theorem, backscattering at hv polarization is equal to that at vh-polarization. This seems to hold in these measurements, although the backscattering at vh-polarization is slightly larger than that at hv-polarization. This result gives an indication for the uncertainty and repeatability of the experiments.

Water increases the backscattering at horizontal polarization and decreases it at vertical polarization as compared to dry asphalt (Fig. 9). This result is also in good agreement with the results from the laboratory tests.

Fig. 8. Measured backscattering of dry, icy and snowy asphalt at different polarizations. Single measurements are represented with markers and solid lines are averaged values over respective road condition and polarization.

Fig. 9. Measured backscattering of dry and wet asphalt at different polarizations. Single measurements are represented with markers and solid lines are averaged values over respective road condition and polarization.

As discussed earlier, it is more favorable to use ratios of different polarizations for detecting road conditions. Figure 10 shows that ice decreases the ratios $\sigma_{vv}/\sigma_{hh}$, $\sigma_{vh}/\sigma_{hh}$ and $\sigma_{hv}/\sigma_{hh}$ 1 - 1.5 dB as compared to dry asphalt. Snow seems to further decrease the ratios 1 - 2 dB. On the contrary, water seems to increase the ratio $\sigma_{vv}/\sigma_{hh}$ by approximately 5 dB, as seen in Fig. 11. According to these results it is possible to detect water, ice and snow on asphalt with 24 GHz radar at 65° incidence angle. The variations between adjacent measurements on the same road condition, however, are so large that averaging is clearly required to reliably identify different road conditions. In an actual radar sensor that is capable to directly measure these ratios, the variation is expected to be substantially smaller.

Fig. 10. Backscattering from dry, icy and snowy asphalt at different polarizations normalized to that at vv-polarization. Single measurements are represented with markers and solid lines are averaged values over respective road condition and polarization.

Fig. 11. Backscattering from dry and wet asphalt at different polarizations normalized to that at vv-polarization. Single measurements are represented with markers and solid lines are averaged values over respective road condition and polarization.

For comparing both automotive radar bands for road condition detection, the field experiments were also performed at 77 GHz. According to these experiments, 24 GHz frequency seems to be better for road condition recognition.

## IV. SURFACE SCATTERINGMODELING

Backscattering of asphalt is modeled in order to relate target parameters to its backscattering properties. The small perturbation model, which was used for surface modeling, assumes homogenous target material. On the contrary to water, ice and snow are low-loss materials at 24 GHz. When there is ice or snow on asphalt, the radar signal experiences a layered structure. Therefore the small perturbation model could be used only for dry and wet asphalt.

### A. Small Perturbation Model

Small perturbation model is used to model backscattering from rough surface [16]. In this model, it is assumed that the target is homogenous material and that the dimensions of the roughness are low as compared to free space wavelength. The backscattering coefficients are calculated from the following equations:

$$\gamma_{pp}^0 = \frac{k^2}{2}e^{-2k_z^2\gamma^2}\sum_{n=1}^{\infty}\left|I_{pp}^n\right|\frac{W^{(n)}(-2k_x)}{n!}, \tag{9}$$

$$I_{pp}^n = (2k_z\gamma)^n f_{pp}e(-k_z^2\gamma^2) + \frac{(k_z\gamma)^n\left[F_{pp}(-k_x)+F_{pp}(k_x)\right]}{2}, \tag{10}$$

$$f_{vv} = \frac{2R_{hh}}{\cos\phi}, \tag{11}$$

$$f_{hh} = -\frac{2R_{vv}}{\cos\phi}, \tag{12}$$

$$F_{vv}(-k_x)+F_{vv}(k_x) = \\ \frac{2\sin^2\phi(1+R_{vv})^2}{\cos\phi}\left[\left(1-\frac{1}{\varepsilon_r}\right)+\frac{\mu_r\varepsilon_r-\sin^2\phi-\varepsilon_r\cos^2\phi}{\varepsilon_r^2\cos^2\phi}\right], \tag{13}$$

$$F_{hh}(-k_x)+F_{hh}(k_x) = \\ \frac{2\sin^2\phi(1+R_{hh})^2}{\cos\phi}\left[\left(1-\frac{1}{\mu_r}\right)+\frac{\mu_r\varepsilon_r-\sin^2\phi-\mu_r\cos^2\phi}{\mu_r^2\cos^2\phi}\right], \tag{14}$$

$$R_{hh} = \frac{\varepsilon_r \cos\phi - \sqrt{\mu_r \varepsilon_r - \sin^2 \phi}}{\varepsilon_r \cos\phi + \sqrt{\mu_r \varepsilon_r - \sin^2 \phi}} \ , \tag{15}$$

$$R_{vv} = \frac{\mu_r \cos\phi - \sqrt{\mu_r \varepsilon_r - \sin^2 \phi}}{\mu_r \cos\phi + \sqrt{\mu_r \varepsilon_r - \sin^2 \phi}} \ , \tag{16}$$

where $k_z = k\cos\Phi$, $k_x = k\sin\Phi$, $k = 2\pi/\lambda$ is the wave number,, $\Phi =$ is the incidence angle with respect to the normal of the surface, $\sigma$ is the rms (root mean square) height of the surface slope, $\varepsilon_r$ and $\mu_r$ are the relative permittivity and permeability of the target, sub indices pp refer to the polarization (hh or w) and $W^{(n)}(-2k_x)$ is the Fourier transform of the $n$th power of the surface correlation coefficient. Assuming that the surface shape is Gaussian correlated and that it has two scale roughnesses, which are not correlated, then

$$W^{(n)}(K) = \sum_{m=0}^{n} \frac{n! a^{n-m} b^m}{(n-m)! m!} \frac{L_e^2}{2} e^{-\frac{(KL_e)^2}{4}} \ , \tag{17}$$

where $a = \sigma_1^2/\sigma$, $b = \sigma_2^2/\sigma$ and $\sigma_1^2$, $\sigma_2^2$ are the variances of the two scale slope heights and $\sigma^2$ is the total variance of the slope height. The reference plane is chosen such that $\sigma$ has zero mean. Square of the equivalent correlation length $L$ is given as:

$$L^2 = \frac{L_1^2 L_2^2}{(n-m)L_2^2 + mL_1^2} \ , \tag{18}$$

where $L_1$ and $L_2$ are the correlation lengths of the two scale roughnesses. The model is valid only for small- and medium-scale surface roughness. For the validity of small perturbation model, it is usually required that

$$(k\gamma)(kL) < 1.2\sqrt{\varepsilon_r} \tag{19}$$

for a surface with permittivity $\varepsilon_r$.

### B. Model Fitting to the Measurements

As asphalt surface statistics, slope heights $\sigma_1^2$ and $\sigma_2^2$ and correlation lengths $L_1$ and $L_2$, are not directly available, the model is
fitted to the laboratory measurement results. The surface parameters are chosen to minimize

$$\int \left| \sigma_{meas,vv}(\phi) - \sigma_{model,vv}(\phi) \right| + \left| \sigma_{meas,hh}(\phi) - \sigma_{model,hh}(\phi) \right| d\phi \ , \tag{20}$$

where the measured $\sigma_{meas}$ and modeled $\sigma_{model}$ backscattering coefficients are given in decibels.

References [17] and [18] announce that the dielectric constant of asphalt is 2.6 at microwave frequencies. This value is used in the model for dry asphalt. According to model presented in [19], the relative permittivity of 20 °C water is 33 - $j$36 at 24 GHz resulting into skin depth of 0.77 mm. Because the water layer thickness in the experiments was substantially higher than the skin depth, the relative permittivity of wet asphalt can be taken the same as that of the water. In this model the relative permittivity of water is set to 33.

### C. Modeled Backscattering

The surface parameters providing the best fit between the model and the laboratory measurement results from wet asphalt are listed in Table I.

TABLE I

PARAMETERS GIVING THE BEST FIT BETWEEN THE LABORATORYMEASUREMENTS AND THEMODEL

|  | Wet asphalt ($\varepsilon_r$ = 33) |
| --- | --- |
| $\sigma_1$ (mm) | 0,6545 |
| $L_1$ (mm) | 14,1840 |
| $\sigma_2$ (mm) | 0,2018 |
| $L_2$ (mm) | 3,7632 |

The modeled backscattering coefficients from wet asphalt with the measured ones are shown in Figure 12.

Fig. 12. The modeled backscattering coefficient from wet asphalt with the measured ones (in the laboratory conditions).

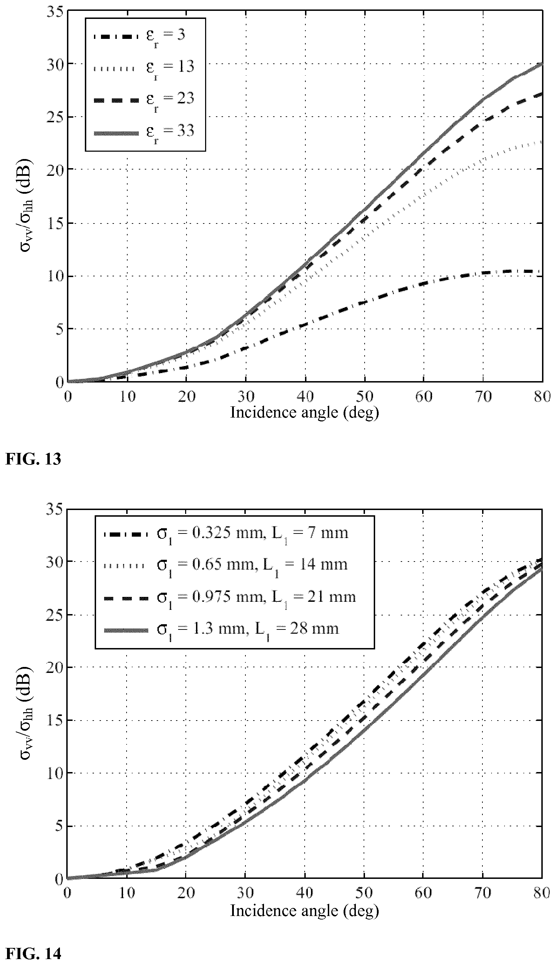

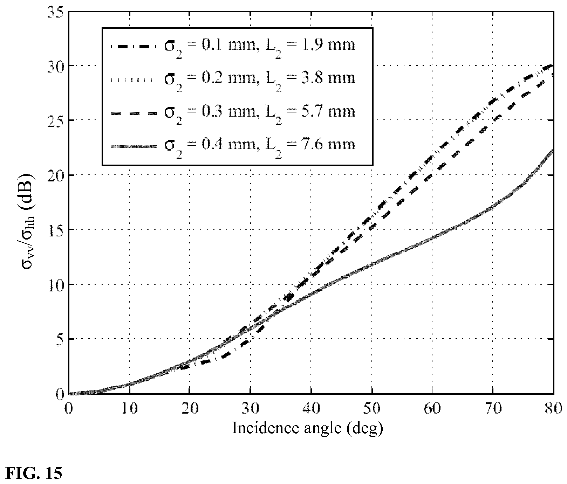

The model is used to study, how surface parameters ($\varepsilon_r$, $\sigma_1$, $L_1$, $\sigma_2$, $L_2$) affect the ratio $\sigma_{vv}/\sigma_{hh}$. Figure 13 shows the ratio at different relative permittivities when other parameters correspond to those presented in Table I. Figure 14 shows the same ratio at different values of $\sigma_1$ and $L_1$, when $\varepsilon_r$ = 33. The effect of parameters $\sigma_2$ and $L_2$ is shown in Figure 15.

Fig. 13. Ratio between backscattering at vv- and hh-polarization at different values of relative permittivity.

Figure 13 reveals that the ratio $\sigma_{vv}/\sigma_{hh}$ increases with the relative permittivity of the target. In this example, $\sigma_{vv}/\sigma_{hh}$ is increased by 17 dB at 70 degree incidence when relative permittivity is increased from 3 to 33. As shown in Figure 14, $\sigma_{vv}/\sigma_{hh}$ is not much changed when surface parameters $\sigma_1$ ja $L_1$ are halved or doubled. When parameters $\sigma_2$ and $L_2$ are doubled from their original values, the ratio is decreased 10 dB at large incidence angles, as shown in Figure 15. However, within the range of used surface parameter values, relative permittivity seems to be the most dominant parameter affecting $\sigma_{vv}/\sigma_{hh}$. This analysis indicates that water on asphalt affects the backscattering ratio much more significantly than the variations in asphalt properties. Thus both theory and experiments support the idea that water on asphalt can be detected with 24 GHz radar with large incidence.

Fig. 14. Ratio between backscattering at vv- and hh-polarization at different values of $\sigma_1$ and $L_1$.

Fig. 15. Ratio between backscattering at vv- and hh-polarization at different values of $\sigma_2$ and $L_2$.

## V. REQUIREMENTS FOR THE RADAR

In order to be able to recognize different road conditions, the radar should be able to measure backscattering at different polarizations. Commercial automotive radar sensors, operating at single polarization only, could be modified to operate at several polarizations by adding a dual polarized antenna with a switch in the transmitter or receiver side or both. A dual polarized radar sensor suitable for automotive applications is described in [20].

When using a radar sensor for multiple purposes, such as for road condition recognition and for collision warning, a switchable antenna is required, such that the radar beam can be switched between the road surface and the direction of motion of the vehicle. When using short range radar with low-gain (and thus broad main beam) antenna it might be possible to align the antenna such that it sees both the road surface and further objects simultaneously.

In the following, let us calculate the power budget for 24 GHz short range radar recognizing road condition. Substituting (6) and (7) into the radar equation (3) gives the received power (at large incidence angles):

$$P_r = \frac{P_t G^2 \lambda^2 \sigma_0}{(4\pi R)^3} \cdot \frac{c\tau\theta_h}{2} \sec(\pi/2 - \phi). \tag{21}$$

A 24 GHz short range automotive radar is presented in [21] with the following parameters: pulse width $\tau$ = 400 ps, peak power $P_t$ = 6 dBm and equivalent isotropically radiated power (EIRP), defined as a product of transmitted power and antenna gain, 20 dBm. This gives an antenna gain of 14 dBi. Assuming a square aperture for the antenna, the beam width is approximately $\theta_h$ = 40° at 24 GHz. Let us further assume that the radar is located 0.5 m above the ground and that the incidence angle is $\Phi$ = 75° resulting to a target distance of $R$ = 1.9 m. According to the field experiments in summer, the scattering coefficients may be 55 dB at the lowest. The noise floor of the receiver is given by

$$P_n = k(T_r + T_a)B, \qquad\qquad (22)$$

where $k$ is the Boltzmann constant, $T_r$ is the noise temperature of the receiver, $T_a$ is the noise temperature of the antenna and $B$ is the noise bandwidth. In the case of frequency modulated continuous wave (FMCW) radar architecture, the noise bandwidth is limited by the Doppler frequency caused by the movement of the vehicle. Assuming maximum vehicle speed of 200 km/h, the Doppler shift at 24 GHz is 9 kHz. Further assuming an antenna temperature of 270 K and a receiver noise temperature of 1160 K (corresponding to 7 dB noise figure), the receiver noise floor is at -127.5 dBm giving 14 dB signal-to-noise - ratio, see Table II. Thus this estimation indicates that 24 GHz short range automotive radar for road condition recognition is well feasible.

TABLE II
ESTIMATED POWER BUDGET

| | |
|---|---|
| Transmitted power | $P_t$ = 6 dBm |
| Antenna gain | $G$ = 14 dBi |
| Wavelength at 24 GHz | $\lambda$ = 1,9 m |
| Distance to the illuminated area | $R$ = 1,9 m |
| Scattering coefficient | $\sigma_0$ = -55 dB |
| Pulse width | $\tau$ = 400 ps |
| Horizontal beam width of the antenna | $\theta_h$ = 40° |
| Incidence angle | |
| Received power | $\Phi$ = 75° |
| Antenna temperature | $P_r$ = -104,5 dBm |
| Receiver noise temperature | $T_a$ = 270 K |
| Noise bandwidth | $T_a$ = 1160 K |
| Noise floor | |
| Signal-to-noise - ratio | $B$ = 9 KHz |
| | $P_n$ = -127,5 dBm |
| | 14 dB |

## VI. CONCLUSIONS

This paper studies the use of 24 GHz automotive radar for detecting low-friction spots caused by water, ice or snow on asphalt. The backscattering properties of dry, wet and icy asphalt are studied in laboratory conditions and backscattering properties of dry, wet, icy and snowy asphalt are studied with field experiments. In addition, the effect of water on backscattering properties of asphalt is studied with a rough surface scattering model.

The measurement of backscattering ratios for different polarizations turned out to the best method to detect low-friction spots. This kind of differential measurement enables to eliminate or reduce the effects of most unknown parameters, such as measurement distance, asphalt properties, weather conditions etc., which affect absolute backscattering measurements.

Backscattering ratios of various polarizations for dry, wet, icy and snowy asphalt were found to be sufficiently different for road condition recognition at 24 GHz. The effect of water on the backscattering properties of asphalt was studied with experiments and with a surface scattering model. According to laboratory and field experiments, water increases the ratio $\sigma_{vv}/\sigma_{hh}$ 3-9 dB at large incidence angles as compared to dry asphalt. The results with the surface scattering model verify that water increases the ratio $\sigma_{vv}/\sigma_{hh}$. The predicted change of 17 dB at 70° incidence, however, was larger than the measured one (7 dB). The surface scattering model was also used to study how surface parameters affect the backscattering properties of asphalt. It was found that water changes the backscattering properties of asphalt more than there may be differences caused by various asphalt types. Therefore water can be reliably detected.

Backscattering properties of icy asphalt were studied with laboratory and field experiments. Both experiments showed that contrary to water, which increases the ratio $\sigma_{vv}/\sigma_{hh}$, ice decreases it 1-2 dB at large incidence angles as compared to dry asphalt.

Field experiments also showed that normalized cross-polarization components, $\sigma_{vh}/\sigma_{hh}$ and $\sigma_{hv}/\sigma_{hh}$, are 1-2 dB lower with icy asphalt than with dry asphalt. Snow was found to further decrease the ratios $\sigma_{vv}/\sigma_{hh}$, $\sigma_{vh}/\sigma_{hh}$ and $\sigma_{hv}/\sigma_{hh}$ 1-2 dB as compared to icy asphalt.

Road condition recognition radar needs to be able to measure backscattering for different polarizations. Commercial automotive radars could be modified by adding a dual polarized antenna with a switch in the transmitter or receiver side or both. In addition, if using multipurpose radar, a switch able antenna is required such that the radar beam can be switched between the road surface and the direction of motion of the vehicle. Power budget calculations showed that 24 GHz short range radar for road condition recognition is well feasible.

Automotive radars are expected to increase safety and driver's comfort by improving driver's ability to perceive objects in low-visibility conditions or objects hidden in blind spots. Automotive radars could also be used for detecting road conditions, such as lowered friction due to water or ice on the road. Currently water and ice is detected with infrared optical sensors which are not cost effective for ordinary passenger cars. The advantage of radar sensors over optical would be that forward looking radars could detect low friction spots from a long range whereas optical sensors' detection range is a few meters only. In addition, when using multipurpose radar sensors the total number of sensors is not increased giving also cost benefits.

Road condition is detected by comparing the backscattered signal from road at different automotive radar frequencies at 24 GHz and at 77 GHz and at different polarisations (linear horizontal or vertical). This requires automotive radar that is capable of switching polarisation and frequency. Current commercially available radar sensors operate at one frequency and polarization only.

The features of the road condition recognition method -invention can be varying with the following characters:

Radar measures the backscattering from the road surface at horizontal and vertical polarizations

Road conditions are recognized from the relative backscattering between different polarizations

The radar operates at 22 - 24 GHz

The radar illuminates the road surface on front of the vehicle

The radar is monostatic (transmitter and receiver in the same location)

The radar antenna beam width is 10 - 20 degrees

The radar signal is pulsed in order to separate the reflection from the road surface from other reflections

An embodiment is a method and an apparatus for road condition recognition wherein road condition is detected by comparing the backscattered signal from the road surface at horizontal and vertical polarizations.

In a further embodiment, the road conditions are recognized from the relative backscattering between different polarizations.

In a further embodiment, the radar operates at 22 - 24 GHz.

In a further embodiment, the radar illuminates the road surface on front of the vehicle.

In a further embodiment, the radar is monostatic (transmitter and receiver in the same location).

In a further embodiment, the radar antenna beam width is 10 - 20 degrees.

In a further embodiment, the radar signal is pulsed in order to separate the reflection from the road surface from other reflections.

**References**

[1] "Electromagnetic compatibility and Radio spectrum Matters (ERM); Radio equipment to be used in 24 GHz band; System Reference Document for automotive collision warning Short Range Radar," ETSI TR 101 982 V1.2.I, July 2002.

[2] "Electromagnetic compatibility and Radio spectrum Matters (ERM); Road Transport and Traffic Telematics (RTTT); Radar equipment operating in the 76 GHz to 77 GHz range; Part I: Technical characteristics and test methods for radar equipment operating in the 76 GHz to 77 GHz range;" ETSI EN 301 091-I VU.3, Nov. 2006.

[3] "Electromagnetic compatibility and Radio spectrum Matters (ERM); Road Transport and Traffic Telematics (RTTT); Radio equipment to be used in the 77 GHz to 81 GHz band; System Reference Document for automotive collision warning Short Range Radar," ETSI TR 102 263 V 1.1.2, Feb. 2004.

[4] M. Andersson, F. Bruzelius, J. Casselgren, M. Gäfvert, M. Hjort, J. Hulten, F. Håbring, M. Klomp, G. Olsson, M. Sjödahl, J. Svendenius, S. Woxneryd, and B. Wälivaara, "Road friction estimation," Saab Automobile AB, Sweden, IV SS Project Report, Reference number: 2004:17750, June 2007.

[5] R. Finkele, A. Schreck, and G. Wanielik, "Polarimetric road condition classification and data visualisation," Proceedings of' the International Geoscience and Remote Sensing Symposium, Firenze, Italy, July 1995, pp. 1786 - 1788.

[6] H. Rudolf, G. Wanielik, and A. J. Sieber, "Road condition recognition using microwaves," Proceedings of the IEEE Conference on Intelligent Transportation System, Boston, MA, USA, Nov. 1997, pp. 996 - 999.

[7] F. T. Ulaby, K. Sarabandi, and A. Nashashibi, "Statistical properties of the Mueller matrix of distributed targets," IEE Proceedings-F. Vol. 139, No. 2, pp. 136 - 146, Apr. 1992.

[8] N. Kees and J. Detlefsen, "Road surface classification by using a polarimetric coherent radar module at millimetre waves," Proceedings of IEEE National Telesystems Conference, 1994, pp. 95 - 98.

[9] R. Finkele, "Detection of ice layers on road surfaces using a polarimetric millimeter wave sensor at 76 GHz," Electronics Setters, Vol. 33, No. 13, pp. 1153 - 1154, June 1997.

[10] W. Hetzner, "Recognition of road conditions with active and passive millimetre-wave sensors," Frequent, Vol. 38, No. 7/8, pp. 179 - 185, 1984.

[11] G. Magerl, W. Pritzl, and W. Frohling, "Remote sensing of road condition," Proceedings of the International Geoscience and Remote Sensing Symposium, June 1991, pp. 2137 -2140.

[12] R. Schneider, G. Wanielik, and J. Wenger, "Radar arrangement for road condition detection in motor vehicle," German patent DE 19715999, Oct. 1998.

[13] R. Finkele, A. Schreck, and G. Wanielik, "Multi-sensor advance detection of road conditions in front of vehicle using narrow beam millimeter radar and infrared radar beam targeting a road section in front of vehicle," German patent DE 19932094, Jan. 2001.

[14] H. S. Kim, "Road surface sensing device," Korean patent KR 2001047234, June 2001.

[15] V. Viikari, T. Varpula, and M. Kantanen, "Automotive radar technology for detecting road conditions. Backscattering properties of dry, wet, and icy asphalt," submitted to The European Radar Conference, 2008.

[16] A. K. Fung, Microwave Spattering and Emission Models and Their Applications. Boston: Artech House, 1994, 573 p.

[17] http://www.clippercontrols.com/info/dielectric_constants.html

[18] http://hypertextbook.com/physics/electricity/dielectrics/

[19] T. Meissner and F. J. Wentz, "The complex dielectric constant of pure and sea water from microwave satellite observations," IEEE Transactions on Geoscience and Remote Sensing, Vo!. 42, No. 9, pp. 1836 - 1849, Sept. 2004.

[20] M. Wollitzer, J. Buechler, J.-F. Luy, U. Siart, E. Schmidhammer, J. Detlefsen, and M. Esslinger, "Multifunctional radar sensor for automotive application," IEEE Transactions on Microwave Theory and Techniques, Vo!. 46, No. 5, pp. 701 -708, May 1998.

[21] M. Klotz and H. Rohling, "24 GHz radar sensors for automotive applications," In the Proceedings of the 13''' International Conference on Microwaves, Radar and Wireless Communications. 2000. MIKON-2000, 2000, pp. 359 - 362.

## Claims

1. A method in automotive radar technology for detecting low friction spots caused by water, ice or snow on asphalt, the method comprising:

   measuring monostatic backscattering from an asphalt sample at different incidence angles and different polarizations,
   computing ratios of backscattered signals for different polarizations, and
   identifying water and ice based on changes in the backscattering properties of the asphalt,

   **characterized by**

   the step of computing ratios comprising eliminating effects of unknown parameters by computing ratios $\sigma_{vv}/\sigma_{hh}$, and
   the step of identifying water and ice comprises comparing the ratios $\sigma_{vv}/\sigma_{hh}$ at small incidence angles and large incidence angles, the large incidence angles being 50°-80°.

2. The method of claim 1, wherein the measurement is performed at incidence angles from 0° to 80° with 5° increments.

3. The method of claim 1, wherein the measurement distance fulfills a farfield distance requirement of $R \geq 2D^2/\lambda$, where $D$ is the largest dimension of the radar antenna and $\lambda$ is the wavelength.

**4.** The method of claim 1, wherein water on asphalt is identified based on that, at larger incidence angles, water increases the backscattering at vertical polarization whereas it decreases backscattering at horizontal polarization.

**5.** The method of claim 1, wherein ice on asphalt is identified based on that ice does not change the backscattering coefficient at normal incidence but increases it at both polarizations at larger incidence angles, as compared to dry asphalt.

**6.** The method of claim 1, wherein ice on asphalt is identified based on that ice increases $\sigma_{vv}/\sigma_{hh}$ at small incidence angles but decreases the ratio at large incidence angles.

**7.** The method of claim 1, using an automotive radar having a dual polarized antenna with a switch in the transmitter or receiver side or both.

**8.** The method of claim 1, using a multipurpose radar having a switchable antenna such that the radar beam can be switched between the road surface and the direction of motion of the vehicle.


**Patentansprüche**

**1.** Verfahren der Automobilradartechnologie zur Erkennung von durch Wasser, Eis oder Schnee auf Asphalt verursachten reibungsarmen Flecken, wobei das Verfahren umfasst:

Messen der monostatischen Rückstreuung aus einer Asphaltprobe bei unterschiedlichen Einfallswinkeln und unterschiedlichen Polarisationen,
Berechnen von Verhältnissen von rückgestreuten Signalen für unterschiedliche Polarisationen, und
Identifizieren von Wasser und Eis auf der Grundlage von Änderungen in den Rückstreueigenschaften des Asphalts,
**gekennzeichnet durch**
den Schritt des Berechnens von Verhältnissen, der das Beseitigen von Wirkungen durch unbekannte Parameter durch Berechnen von Verhältnissen $\sigma_{vv}/\sigma_{hh}$ umfasst, und
den Schritt des Identifizierens von Wasser und Eis, der das Vergleichen der Verhältnisse $\sigma_{vv}/\sigma_{hh}$ bei kleinen Einfallswinkeln und großen Einfallswinkeln umfasst, wobei die großen Einfallswinkel 50° - 80° betragen.

**2.** Verfahren nach Anspruch 1, wobei die Messung bei Einfallswinkeln von 0° bis 80° in 5°-Schritten durchgeführt wird.

**3.** Verfahren nach Anspruch 1, wobei die Messdistanz eine Fernfelddistanzanforderung von $R \geq 2D^2/\lambda$ erfüllt, bei der $D$ die größte Abmessung der Radarantenne ist und $\lambda$ die Wellenlänge ist.

**4.** Verfahren nach Anspruch 1, wobei eine Identifizierung von Wasser auf dem Asphalt darauf basiert, dass bei größeren Einfallswinkeln die Rückstreuung bei vertikaler Polarisation erhöht wird, während die Rückstreuung bei horizontaler Polarisation verringert wird.

**5.** Verfahren nach Anspruch 1, wobei eine Identifizierung von Eis auf dem Asphalt darauf basiert, dass bei Eis die Rückstreukoeffizienten bei normalen Einfallswinkeln nicht verändert werden, jedoch erhöht es ihn bei beiden Polarisationen bei größeren Einfallswinkeln verglichen mit trockenem Asphalt.

**6.** Verfahren nach Anspruch 1, wobei eine Identifizierung von Eis auf Asphalt darauf basiert, dass bei Eis $\sigma_{vv}/\sigma_{hh}$ bei kleinen Einfallswinkeln erhöht wird, aber das Verhältnis bei großen Einfallswinkeln verringert wird.

**7.** Verfahren nach Anspruch 1, wobei ein Automobilradar verwendet wird, das eine doppelpolarisierte Antenne mit einem Schalter in der Sender- oder Empfängerseite oder beiden aufweist.

**8.** Verfahren nach Anspruch 1, wobei ein Mehrzweckradar verwendet wird, das eine schaltbare Antenne aufweist, so dass der Radarstrahl zwischen der Straßenoberfläche und der Bewegungsrichtung des Fahrzeugs umschaltbar ist.

**Revendications**

1. Procédé en technologie radar automobile pour détecter des points de faible frottement provoqués par l'eau, la glace ou la neige sur l'asphalte, le procédé comprenant :

   la mesure de la rétrodiffusion monostatique depuis un échantillon d'asphalte à différents angles d'incidence et différentes polarisations,
   le calcul de rapports de signaux rétrodiffusés pour différentes polarisations et
   l'identification de l'eau et de la glace sur la base de changements dans les propriétés de rétrodiffusion de l'asphalte,
   **caractérisé par :**

   l'étape de calcul de rapports comprenant l'élimination d'effets de paramètres inconnus par calcul de rapports $\sigma_{vv}/\sigma_{hh}$ et
   l'étape d'identification d'eau et de glace comprenant la comparaison des rapports $\sigma_{vv}/\sigma_{hh}$ à de faibles angles d'incidence et à de grands angles d'incidence, les grands angles d'incidence étant de 50° à 80°.

2. Procédé selon la revendication 1, dans lequel la mesure est effectuée à des angles d'incidence de 0° à 80° avec des incréments de 5°.

3. Procédé selon la revendication 1, dans lequel la distance de mesure répond à une exigence de distance de champ lointain de R ≥ 2D$^2$/λ, où D est la dimension la plus grande de l'antenne radar et λ est la longueur d'onde.

4. Procédé selon la revendication 1, dans lequel l'eau sur l'asphalte est identifiée sur la base du fait qu'aux grands angles d'incidence, l'eau augmente la rétrodiffusion en polarisation verticale tandis qu'elle diminue la rétrodiffusion en polarisation horizontale.

5. Procédé selon la revendication 1, dans lequel la glace sur l'asphalte est identifiée sur la base du fait que la glace ne change pas le coefficient de rétrodiffusion en incidence normale, mais l'augmente aux deux polarisations aux grands angles d'incidence en comparaison de l'asphalte sèche.

6. Procédé selon la revendication 1, dans lequel la glace sur l'asphalte est identifiée sur la base du fait que la glace augmente $\sigma_{vv}/\sigma_{hh}$ aux faibles angles d'incidence, mais diminue le rapport aux grands angles d'incidence.

7. Procédé selon la revendication 1, utilisant un radar automobile ayant une antenne polarisée double avec un commutateur du côté émetteur ou du côté récepteur ou des deux.

8. Procédé selon la revendication 1, utilisant un radar polyvalent ayant une antenne commutable telle que le faisceau radar puisse être commuté entre la surface de la route et la direction de déplacement du véhicule.

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

**FIG. 14**

**FIG. 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0875749 A2
- DE 19715999
- DE 19932094
- KR 2001047234

### Non-patent literature cited in the description

- **K. SARABANDI et al.** Modeling and Measurements of Scattering from Road Surfaces at Millimeter-Wave Frequencies. *IEE Transactions on Antennas and Propagation,* 01 November 1997, vol. 45 (11), 1679-1688
- **H. RUDOLF et al.** The RoCoCo Project: A Cooperation between EMSL and Daimler-Benz. *1st EMSL User Workshop, Proceedings,* 23 April 1996, vol. EUR-17326-EN, 13-18
- Electromagnetic compatibility and Radio spectrum Matters (ERM); Radio equipment to be used in 24 GHz band; System Reference Document for automotive collision warning Short Range Radar. *ETSI TR 101 982,* July 2002
- Electromagnetic compatibility and Radio spectrum Matters (ERM); Road Transport and Traffic Telematics (RTTT); Radar equipment operating in the 76 GHz to 77 GHz range; Part I: Technical characteristics and test methods for radar equipment operating in the 76 GHz to 77 GHz range. *ETSI EN 301 091-I VU,* 03 November 2006
- Electromagnetic compatibility and Radio spectrum Matters (ERM); Road Transport and Traffic Telematics (RTTT); Radio equipment to be used in the 77 GHz to 81 GHz band; System Reference Document for automotive collision warning Short Range Radar. *ETSI TR 102 263,* 02 February 2004
- Road friction estimation. **M. ANDERSSON ; F. BRUZELIUS ; J. CASSELGREN ; M. GÄFVERT ; M. HJORT ; J. HULTEN, F. HÅBRING ; M. KLOMP ; G. OLSSON ; M. SJÖDAHL ; J. SVENDENIUS.** Project Report. Saab Automobile AB, June 2007, vol. 2004, 17750
- **R. FINKELE ; A. SCHRECK ; G. WANIELIK.** Polarimetric road condition classification and data visualisation. *Proceedings of' the International Geoscience and Remote Sensing Symposium,* July 1995, 1786-1788
- **H. RUDOLF ; G. WANIELIK ; A. J. SIEBER.** Road condition recognition using microwaves. *Proceedings of the IEEE Conference on Intelligent Transportation System,* November 1997, 996-999
- **F. T. ULABY ; K. SARABANDI ; A. NASHASHIBI.** Statistical properties of the Mueller matrix of distributed targets. *IEE Proceedings-F,* April 1992, vol. 139 (2), 136-146
- **N. KEES ; J. DETLEFSEN.** Road surface classification by using a polarimetric coherent radar module at millimetre waves. *Proceedings of IEEE National Telesystems Conference,* 1994, 95-98
- **R. FINKELE.** Detection of ice layers on road surfaces using a polarimetric millimeter wave sensor at 76 GHz. *Electronics Setters,* June 1997, vol. 33 (13), 1153-1154
- **W. HETZNER.** Recognition of road conditions with active and passive millimetre-wave sensors. *Frequent,* 1984, vol. 38 (7/8), 179-185
- **G. MAGERL ; W. PRITZL ; W. FROHLING.** Remote sensing of road condition. *Proceedings of the International Geoscience and Remote Sensing Symposium,* June 1991, 2137-2140
- **V. VIIKARI ; T. VARPULA ; M. KANTANEN.** Automotive radar technology for detecting road conditions. Backscattering properties of dry, wet, and icy asphalt. *submitted to The European Radar Conference,* 2008
- **A. K. FUNG.** *Microwave Spattering and Emission Models and Their Applications,* 1994, 573
- **T. MEISSNER ; F. J. WENTZ.** The complex dielectric constant of pure and sea water from microwave satellite observations. *IEEE Transactions on Geoscience and Remote Sensing,* September 2004, vol. 42 (9), 1836-1849
- **M. WOLLITZER ; J. BUECHLER ; J.-F. LUY ; U. SIART ; E. SCHMIDHAMMER ; J. DETLEFSEN ; M. ESSLINGER.** Multifunctional radar sensor for automotive application. *IEEE Transactions on Microwave Theory and Techniques,* May 1998, vol. 46 (5), 701-708
- 24 GHz radar sensors for automotive applications. **M. KLOTZ ; H. ROHLING.** the Proceedings of the 13''' International Conference on Microwaves. Radar and Wireless Communications, 2000, 359-362